(19) Europäisches Patentamt / European Patent Office / Office européen des brevets

(11) **EP 4 756 376 A1**

(12) **EUROPEAN PATENT APPLICATION**

(43) Date of publication:
**10.06.2026 Bulletin 2026/24**

(21) Application number: **24217383.9**

(22) Date of filing: **04.12.2024**

(51) International Patent Classification (IPC):
**G01C 21/00** (2006.01)   **G06T 7/30** (2017.01)

(52) Cooperative Patent Classification (CPC):
**G01C 21/3841; G01C 21/3811; G01S 7/295;**
**G01S 7/4808; G01S 13/89; G01S 13/931;**
**G01S 17/89; G01S 17/931; G06T 7/30; G06T 7/33**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **VOLKSWAGEN AG**
**38440 Wolfsburg (DE)**

(72) Inventors:
• **Wappler, Dr. Stefan**
  **38440 Wolfsburg (DE)**
• **Mendoza, Dr. Ricardo Carillo**
  **38440 Wolfsburg (DE)**

(54) **METHOD FOR A PAIRWISE ALIGNMENT OF A PLURALITY OF SINGLE DRIVE MAPS**

(57)   The invention discloses a method for a pairwise alignment of a plurality of single drive maps (SDM1, SDM2), each single drive map (SDM1, SDM2) containing a plurality of data objects (6) associated with corresponding fixed objects (4) of a bordered traffic area (1), said data objects (4) being based on a data collection by a respective vehicle (mv1, mv2) when driving through said bordered traffic area (1), wherein a first single drive map (SDM1), based on its respective data objects (6), is converted into a first point cloud containing first points ($\mathbf{p}_j$), and a second single drive map (SDM2), based on its respective data objects (6), is converted into a second point cloud containing second points ($\mathbf{q}_j$), wherein for each first point ($\mathbf{p}_j$), a corresponding second point ($\mathbf{q}_{c(j)}$) is determined, establishing thereby a correspondence relation (c(j)), and a point distance ($d_j$) between each first points ($\mathbf{p}_j$) and their corresponding second points ($\mathbf{q}_{c(j)}$) is calculated, wherein the first points ($\mathbf{p}_j$) and/or corresponding second points ($\mathbf{q}_{c(j)}$) are sorted based on said point distances ($d_j$), wherein a number of valid first points ($\mathbf{pv}_j$) of the first point cloud and corresponding valid second points ($\mathbf{qv}_{c(j)}$) of the second point cloud is selected on the basis of their respective sorted point distances ($d_j$), wherein a weight vector comprising a number of weights ($W_j$) respectively assigned to the valid first and/or second points ($\mathbf{pv}_j$, $\mathbf{qv}_{c(j)}$) is determined on the basis of the valid first and second points' respective point distances ($d_j$), and wherein a rigid transform (R, t) for mapping the second single drive map (SDM2) is derived, said rigid transform (R, t) being determined on the basis of said weight vector and said correspondence (c(j)) of the valid first points ($\mathbf{p}_j$) with the respective valid second points ($\mathbf{qv}_{c(j)}$) and/or said point distances ($d_j$).

Fig. 2

**Description**

The invention is related to a method for a pairwise alignment of a plurality of single drive maps, each single drive map containing a plurality of data objects associated with corresponding fixed objects of a bordered traffic area, said data objects being based on a data collection by a respective vehicle when driving through said bordered traffic area.

Motor vehicles are increasingly equipped with driver assistance systems (DAS) for a variety of specific driving situations, ranging from warning systems such as lane departure warning systems to so-called advanced DAS such as adaptive cruise control or intelligent parking assist systems, among others. A common denominator of these DAS is the acquisition of spatial information about the surroundings of a motor vehicle at a given point in time by means of a number of environment sensors, and an evaluation of the data gathered by said environment sensors in order to assess the specific driving situation regarding relevant objects for the particular DAS. The environment sensors typically are given by Radar-based and/or Lidar-based sensors, and/or cameras or similar optical sensors.

In the increasing autonomy levels of DAS, the motor vehicles are operated with increasing degrees of automatization of more and more driving functions. One major goal is to achieve the so-called "Level 5" corresponding to a fully automatic driving operation in a specific traffic situation and/or traffic area without any need of driver supervision or even attention. To this end, very detailed geographical (and geometrical) information, i.e., driving maps, are required for said automatic operation. While such information can be easily obtained by the use of satellite image data for most roads and streets, opening the possibility to automatically navigate a motor vehicle along a virtual map corresponding to such a satellite image by means of GPS and said optical sensors (the latter ensuring lane keeping etc.), this information is typically not available for indoor spaces such as indoor parking lots. However, the process of parking a motor vehicle is one very prominent objective of current developments in the field, as the entire parking process with its standardized motions and the typical low speeds and few moving vehicles on a parking lot appear among the most promising driving processes for reaching full autonomy, i.e., Level 5, without any compromise on the safety.

To this end, one possible approach might be to derive a map from a parking lot (in particular, an indoor parking lot) from the sensor data of a multitude of motor vehicles driving through said parking lot, e.g., by generating so-called single drive maps (SDM) from each drive of a motor vehicle through at least a portion of the parking lot, said SDM containing relevant object of the parking lot such as walls or poles, and joining these SDMs together in order to have more robust information on these objects, as well as to fill blank spaces where no motor vehicle has been driving yet, and thus, no sensor data at all exists.

One of the challenges of this approach is the proper alignment of the different SDMs generated by different motor vehicles. As in indoor parking lots, typical GPS systems for positioning the respective motor vehicle with respect to a reference frame (in order to align the motor vehicle's SDM using the reference frame) normally stop working at a certain point. Thus, the information for linking collected sensor and image data to the reference frame is lost. However, this loss is independent for different motor vehicles. Similar problems may arise in other bordered traffic areas whenever a GPS signal or the like are disturbed by the surroundings (e.g., large metal objects close to the bordered traffic area).

It is therefore an object of the invention to provide a method for a pairwise alignment of single drive maps each of which representing at least a part of the same bordered traffic area without the need for an external reference frame given by a GPS signal or the like.

According to the invention, this objective is achieved by a method for a pairwise alignment of a plurality of single drive maps, each single drive map containing a plurality of data objects associated with corresponding fixed objects of a bordered traffic area, said data objects being based on a data collection by a respective vehicle when driving through said bordered traffic area, wherein a first single drive map, based on its respective data objects, is converted into a first point cloud containing first points, and a second single drive map, based on its respective data objects, is converted into a second point cloud containing second points, wherein for each first point, a corresponding second point is determined, establishing thereby a correspondence relation, and a point distance between each first points and their corresponding second points is calculated, and wherein the first and/or corresponding second points are sorted based on said point distances.

According to the method, a number of valid first points of the first point cloud and corresponding valid second points of the second point cloud is selected on the basis of their respective sorted point distances, wherein a weight vector comprising a number of weights respectively assigned to the valid first and/or second points is determined on the basis of the valid first and second points' respective point distances, and wherein a rigid transform for mapping the second single drive map is derived, said rigid transform being determined on the basis of said weight vector, said correspondence relation of the valid first points with the respective valid second points, and preferably on the basis of said point distances. Embodiments of particular advantage, and which may be inventive in their own right, are given in the dependent claims and in the following description.

The notion of a bordered traffic area in particular comprises any traffic area, i.e., an area configured and designed to host the traffic of motor vehicles (e.g., by pavement and possibly further preparations and/or installation) that has a physical border with respect to its surroundings, or that by design can be restricted to a space within virtual boundaries. In particular, a bordered traffic area may be given by a parking lot.

The notion of a single drive map (SDM) comprises a map that has been generated by using sensors of a motor vehicle , that has been driving through said bordered traffic area, preferably during one continuous drive of said motor vehicle through the bordered traffic area, i.e., when the same motor vehicle passes through said bordered traffic area on different occasions, preferably, a new SDM is generated each time. The SDM single map contains a plurality of data objects, said data objects preferably comprising positioning information on fixed, i.e., non-moving physical objects such as walls and poles, and preferably on non-moving virtual objects such as parking slots (and/or their respective delimitations). The positioning information may be given as a relative positioning information, obtained via odometry data of the motor vehicle while driving through the bordered traffic area. In particular, said relative positioning information may be given without any direct link to any reference frame, e.g., given by GPS or similar absolute positioning data. In summary, the data objects correspond to said fixed physical and/or virtual objects in the bordered traffic area (such as walls, poles or parking slots), and preferably comprise relative positioning information on these fixed objects.

The SDM is preferably generated from a data collection during said drive-through of a motor vehicle in the bordered traffic area. The data collection preferably comprises collecting positioning information data on said fixed objects by means of a number of radar sensors and/or a number of lidar sensors and/or a number of cameras of the respective motor vehicle, and further comprises a corresponding evaluation of the collected sensor data with respect to a relative position and/or a relative distance to the motor vehicle. In particular, the SDM may be a pre-classified map in the sense that it comprises information on the specific type of a fixed object related to a data object (e.g., whether it is a pole or a wall), and/or in that is has interpolated data on inferred boundaries of the fixed objects, i.e., that possibly sparse or otherwise incomplete data on a specific fixed object is interpolated to have the entire extension of the fixed object covered in the corresponding data object. In other words, if a data collection from a wall gives only a set of discontinuous radar points, the data object in the SDM corresponding to this wall preferably displays the entire wall (and has the full positioning information, inferred from said radar points via said pre-classification).

The conversion of the first SDM may be given by a trivial operation, i.e., the first SDM may already be given as a point cloud of radar and/or Lidar data points (and in particular, without any pre-classification nor interpolation). If the first SDM is not given by a point cloud, then said conversion is given by a non-trivial operation, which may include assigning certain data points (in particular, interpolated and/or inferred data points) of data objects a grid cell of a regular grid representing a spatial area of the bordered traffic area. The points of the first point cloud of the first SDM shall be denoted the first points. An analogous reasoning may hold for the second SDM regarding the second points.

In particular, the establishment of said correspondence relation by determining a corresponding second point to each first point, comprises determining a minimal distance between each first point and each possible second point, or each possible second point after application of an initial transform. The correspondence relation c (j) of the indices j of the first points $\mathbf{p}_j$ with the corresponding second points $\mathbf{q}_{c(j)}$ can then in particular read

$$\text{(i)} \qquad c\,(j) = \arg\min \| \mathbf{R}_{\text{ini}}\, \mathbf{q}_{c(j)} + \mathbf{t}_{\text{ini}} - \mathbf{p}_j \|^2$$

wherein $\mathbf{R}_{\text{ini}}$, $\mathbf{t}_{\text{ini}}$ represent the rotation and translation of an initial rigid transform, which (in particular, in absence of any other initial transform) also may be given by the identity matrix for the rotation and the null vector for the translation.

The sorting of said point distances $d_j$, which in particular may be given by Euclidean distances $d_j = \| \mathbf{R}_{\text{ini}}\, \mathbf{q}_{c(j)} + \mathbf{t}_{\text{ini}} - \mathbf{p}_j \|^2$ after the application of said initial rigid transform to the valid second points, in particular comprises that said point distances $d_j$ are sorted, e.g., in ascending order, establishing thus a mapping $j \to m\,(j)$ with $d_{m(j)} < d_{m(j)+1}$, and more generally $d_{m(j)} < d_{m(k)}$ for $m\,(j) < m\,(k)$.

Without loss of generality, one may assume thus that the index set j already corresponds to a sorting of the point distances, i.e., $d_j < d_{j+1}$ for all j.

The selection of a number of valid first points of the first point cloud and corresponding valid second points of the second point cloud on the basis of their respective sorted point distances in particular comprises that at least several first points and/or several second points are discarded on the basis of their respective sorted point distances, i.e., that these first and/or second points are "discarded", i.e., not selected into the sets of valid first and second points, on the basis of their sorted point distances. In particular, a pair of a first point and a corresponding second point may be discarded if their point distance is determined as being too large in comparison to other point pairs' sorted point distances and/or in comparison to a fixed threshold, or if a relative change of their point distance is determined as too high.

For the method, a weight vector is determined, wherein the entries are given by respective weights, each of the weights being assigned to a valid first point and/or a (corresponding) valid second point. Such a weight, i.e., a particular entry $w_j$ of the weight vector that is assigned to a valid first point and/or a (corresponding) valid second point depends on the respective point distance $d_j$ between the valid first point $\mathbf{pv}_j$ and the corresponding valid second point $\mathbf{qv}_{c(j)}$, or on the corresponding valid second point $\mathbf{qv}_{c(j)}$ after the application of an initial transform. Preferably, the weight $w_j$ may also depend on other point distances $d_i$, $i \neq j$, in particular, on a fixed point distance $d_k$, and most preferably, on a difference of

these i.e., $w_j$ depends on $d_k - d_j$. In particular, the weights are chosen such that $0 \le w_j < 1$ and/or that their sum yields 1, i.e., $\Sigma_j$ $w_j = 1$.

From the correspondence c(j) of the valid first points $\mathbf{pv}_j$ with the corresponding valid second points $\mathbf{qv}_{c(j)}$, and from said weight vector $\mathbf{w}$ (with entries $w_j$), and possibly from their respective point distances $d_j$, a rigid transform for mapping the second drive map is derived, i.e., a rigid transform comprising a rotation $\mathbf{R}$ and a translation $\mathbf{t}$ mapping each data point of the second SDM onto a corresponding mapped data point, preserving all distance relations between any two data points of the second SDM. Preferably, said rigid transform is derived as an optimal rigid transform with respect to an optimization of a cost function such as a weighted distance measure between certain data points of the first SDM, in particular the valid first points, and the corresponding mapped data points of the (mapped) second SDM (in particular, the mapped valid second points). Such a weighted distance measure WDM, without loss of generality, may be given by

$$(ii) \qquad WDM = \Sigma_j \, w_j \, \| \, \mathbf{R} \, \mathbf{qv}_{c(j)} + \mathbf{t} - \mathbf{pv}_j \, \|^2$$

The WDM of equation (ii) can then be optimized with respect to the rigid transform $\mathbf{R}, \mathbf{t}$ and the weight vector $\mathbf{w}$ (under the possible condition of $\Sigma_j \, w_j = 1$). In another preferred alternative, said rigid transform is derived as an optimal rigid transform with respect to an overlap measure or yet another optimality criterion.

The optimization of WDM as given by equation (ii) may be performed separately for $\mathbf{R}, \mathbf{t}, \mathbf{w}$ yielding solutions that may depend on the particular conditions on the weight vector $\mathbf{w}$.

One major advantage of the presented method for a pairwise alignment of SDMs is that the method does not require any information on absolute positions of the fixed objects represented in the SDMs, but achieves an alignment exclusively based on the correspondence relation established between the first and second point, due to similarities of the data objects contained in the SDMs (and representing said fixed objects of the underlying bordered traffic area). Furthermore, the selection of valid points in each SDM allows for a robust process in the highly likely case that one SDM only cover a part of the other SDM as the motorized vehicle collecting the data for the former SDM has only driven through a smaller part of the bordered traffic area than the motorized vehicle that was collecting the data for the latter SDM. Using the weights for determining the optimal rigid transform allows for a more robust method against noisy data (e.g., against noise from the data collection).

In an embodiment, the rigid transform is applied to the second single drive map, and the steps of (a) establishing a correspondence relation between said first and second points, of (b) calculating a point distance between each first points and their corresponding second points, of (c) sorting the first and/or second points based on said point distances, of (d) selecting a number of valid first points and corresponding valid second points on the basis of their respective sorted point distances, of (e) determining a number of weights respectively assigned to the valid first and/or second points on the basis of the valid first and second points' respective point distances and of (f) deriving a rigid transform for mapping the second single drive map on the basis of said weights, said correspondence relation and/or said point distances, as well as applying said rigid transform ($\mathbf{R}, \mathbf{t}$) to the second single drive map (g), are iterated until a convergence criterion is fulfilled. In particular, this comprises that, after possibly applying an initial transform to the second points, steps (a) to (g) are performed at least once, and are possibly repeated until a convergence criterion such as a step-size based criterion on the rigid transform itself or a criterion on the point distances (such as the WDM of equation (ii)) is fulfilled.

In particular, this may comprise that the correspondence relationship c (j) between the first points $\mathbf{p}_j$ of the first SDM and the second points $\mathbf{q}_j$ of the second SDM is determined over all points again at each new iteration cycle (not only over valid points $\mathbf{pv}_j$ (k - 1) from the previous iteration round k - 1). Furthermore, this may comprise that a new set of valid first and second points $\mathbf{pv}_j$ (k), $\mathbf{qv}_{c(j)}$ (k) (as well as new sorted distances $d_j$ (k)) are determined in each iteration round k.

In an embodiment, in each iteration round k, an overlap measure Ov of at least the valid first points $\mathbf{pv}_j$ (k) with a transformed set of valid second points, and in particular of all first points $\mathbf{v}_j$ (k) with a transformed set of all corresponding second points $\mathbf{q}_{c(j)}$ (k), is calculated, said transformed set of valid second points (or of all corresponding second points) being derived by applying the rigid transform $\mathbf{R}$ (k - 1), $\mathbf{t}$ (k - 1) of the previous iteration round (k - 1) to the valid second points $\mathbf{qv}_{c(j)}$ (k) (or to all second points $\mathbf{q}_{c(j)}$ (k)), and wherein a final rigid transform of the iteration is determined on the basis of the values of the overlap measures of each iteration round. Said final rigid transform preferably is to be understood as the result of the method, i.e., the output of a corresponding algorithm. While during the iteration, different rigid transforms $\mathbf{R}$ (k), $\mathbf{t}$ (k) are presented in the respective iteration round k and applied in the same iteration round k or in a subsequent iteration round k+1, the rigid transform which finally shall be applied after the end of the iteration, i.e., when the convergence criterion is fulfilled, is not necessarily equal to the rigid transform of the last iteration round (in order to counter a possible non-uniform convergence). In particular, the final rigid transform to be applied for the alignment may be given by the rigid transform which maximizes said overlap measure.

Preferably, said convergence criterion is determined on the basis of a distance measure between the rigid transforms of two subsequent iteration rounds. The distance measure may be given, e.g., by a component-wise change rate, i.e., $|r_{ij}$ (k+1) - $r_{ij}$ (k)$|$ (or for a relative change rate, divided by $|r_{ij}$ (k)$|$) with $r_{ij}$ (k) being the entry [i,j] of the rotation matrix $\mathbf{R}$

(k) in the k-th iteration (and a similar criterion for the translation **t**). If said change rate drops below a threshold, then convergence is assumed.

In another embodiment, said convergence criterion is determined on the basis of said overlap measure, in particular, of a change rate Ov (k+1) - Ov (k). If said change rate drops below a threshold, then convergence is assumed.

In yet a further embodiment, for said overlap measure Ov, the first SDM is converted into a grid of a multiplicity of first cells sdm1[i,j] at least in the range of the first valid points, and a transformed second SDM, being defined as the second SDM after applying the rigid transform, is converted into a grid of a multiplicity of second cells tsdm2[i,j] at least in the range of said transformed set of valid second points, and wherein the overlap measure is derived on the basis of a cell-wise coincidence count of first valid points with the corresponding valid second points from the transformed set. The overlap measure Ov may then be defined by

$$(iii) \qquad \mathrm{Ov} = \frac{1}{n} \sum_{i=0}^{x} \sum_{j=0}^{y} sdm1[i,j] \cdot tsdm2[i,j]$$

with x, y being the borders of the overlapping rectangle of the range of the valid first and second points, and n being the number of occupied cells of the first (or second) SDM (i.e., #(sdm1[i,j] = 1) = n). The overlap measure Ov, in particular, may also be defined over the range of all first and (corresponding) second points, being x and y the borders of the overlapping rectangle of the first and second SDM.

Preferably, prior to the process of determining said rigid transform or the rigid transform of the first iteration round, an initial transform $\mathbf{R}_{ini}$, $\mathbf{t}_{ini}$ is performed on the second SDM, said initial transform $\mathbf{R}_{ini}$, $\mathbf{t}_{ini}$ being determined on the basis of a morphological analysis of objects represented in the first and/or second SDM. Said morphological analysis preferably takes into account a data object's geometrical properties and the data object's surroundings as a whole (instead of working point-wise or cell-wise on the entire SDM). While the initial transform $\mathbf{R}_{ini}$, $\mathbf{t}_{ini}$ may also be given by the trivial transform (i.e., the identity matrix and the null vector), having an initial transform from another algorithm already "pre-aligns" the two SDMs and thus allows for a more robust correspondence relation between the first and second points. Furthermore, it allows for the present method and said other algorithm complement their strengths and cancel their weaknesses.

In particular, said initial transform is determined on the basis of an image analysis as said morphological analysis, said image analysis being performed on respective first and second images derived from the first and second single drive map, and employing a determination of key points and corresponding feature descriptors for matching corresponding points of the first and second single drive map. Such an image analysis allows for the desired consideration of the data object (and its surroundings) as a whole by determining one or a few key points to a data object and determining a feature descriptor of the geometry at said key points.

Preferably, for selecting said number of valid first points and corresponding valid second points, a rate of change in said sorted point distances is taken into account. In particular, this comprises that when the rate of change $d_{j+1} - d_j$ (or divided by an overall normalization factor) for two subsequent <u>sorted</u> distances $d_{j+1}$, $d_j$ exceeds a given threshold, this means that certain points from one SDM cease to have a proper correspondence in the other SMD.

In an embodiment, a first valid area a1 of the first SDM and a second valid area a2 of the second SDM are estimated based on said first points $\mathbf{p}_j$ and said second points $\mathbf{q}_j$, respectively, wherein for selecting said number of valid first points $\mathbf{pv}_j$ and corresponding valid second points $\mathbf{qv}_{c(j)}$ (or $\mathbf{qv}_j$, assuming that the distances $d_j$ are already sorted), a scaling of said point distances based on a ratio a1/a2 of said first valid area and said second valid area is taken into account. Said first valid area a1 in particular may be chosen to enclose all of said first points $\mathbf{p}_j$, and preferably may be given by a minimal square or a minimal convex hull which encloses all of said first points $\mathbf{p}_j$ (the same may hold accordingly for the second valid area a2 with respect to the second points $\mathbf{q}_j$). Said scaling can in particular be performed via a monotonous function of the ratio a1/a2 with an increasing slope in order to increase the values of said point distances $d_j$ for a better numerical stability of the sorting process. Preferably, in case of a non-trivial initial transform $\mathbf{R}_{ini} \neq \mathbf{Id}$, $\mathbf{t}_{ini} \neq \mathbf{null}$ or a higher order iteration round k > 1, the valid second points are preferably to be taken $\mathbf{qv}_{c(j)}$ after application of the initial transform $\mathbf{R}_{ini}$, $\mathbf{t}_{ini}$ or the rigid transform $\mathbf{R}$ (k - 1), t (k - 1) of the previous iteration round (k - 1).

In an embodiment, a rotation $\mathbf{R}$ of said rigid transform $\mathbf{R}, \mathbf{t}$ is determined on the basis of a singular value decomposition method, using a first matrix $\mathbf{P}$ of the first valid points $\mathbf{pv}_j$, a second matrix $\mathbf{Q}$ of the second valid points $\mathbf{qv}_{c(j)}$ and a weight matrix $\mathbf{W}$ containing said entries of said weight vector $\mathbf{w}$ in said singular value decomposition method. While an optimal rigid transform may also be obtained using quaternions, the singular value decomposition method is of particular advantage in the present case, as it is robust, easy to implement on an algebraic level, and has a high degree of conceptual clarity.

For minimizing the weighted distance measure WDM of equation (ii) between the valid first points $\mathbf{pv}_j$ and the corresponding transformed valid second points $\mathbf{R} \cdot \mathbf{qv}_{c(j)} + \mathbf{t}$ (i.e., the $\mathbf{w}$-weighted sum of their squared distances), the rotation $\mathbf{R}$ and the translation $\mathbf{t}$ may be minimized independently from each other. The minimization of the rotation $\mathbf{R}$ corresponds to finding the maximal $\mathbf{R}$ to the matrix

(iv) $\quad$ Tr$\{$ R Q W P$^T\}$ with Q $= \Sigma_j$ qv$_{c(j)}$ qv$_{c(j)}^T$ and P $= \Sigma_j$ pv$_j$ pv$_j^T$, and W $=$ diag(w$_j$) ,

i.e., with the matrices of the respective valid first points and corresponding valid second points **pv**$_j$, **qv**$_{c(j)}$, as well as a diagonal matrix of the weight vector **w.** The Matrix **S** $=$ **Q W P**$^T$ may be decomposed into its singular value matrix Σ and two orthogonal matrices **U, V** as **S** $=$ **Q W P**$^T$ $=$ **U** Σ **V**$^T$. As the trace Tr$\{$ **R Q W P**$^T\}$ $=$ Tr$\{$ **V**$^T$ **R U** Σ $\}$ in Eq. (iv) contains the matrix M $=$ **V**$^T$ **R U** which is also orthogonal, all its entries m$_{ij}$ have a modulus | m$_{ij}$ | $\leq 1$. Then, the trace is maximized for the case of m$_{jj}$ $= 1$ for all diagonal elements of **M,** i.e., when **M** is given by the identity matrix **1** and, thus, **R = V U**$^T$ (up to a sign factor) with the orthogonal matrices **U, V** from the singular value decomposition **U** Σ **V**$^T$ $=$ **Q W P**$^T$ of the matrices of the respective valid first and second points **pv**$_j$, **qv**$_{c(j)}$.

$\quad$ Preferably, a translation **t** of said rigid transform **R, t** is determined on the basis of a weighted mean of the first valid points **pv**$_j$ and a weighted mean of the second valid points **qv**$_{c(j)}$, said weighted means being weighted by said weight vector **w.** When minimizing the weighted distance measure WDM of equation (ii) with respect to the translation **t,** it can be seen that under the imposed condition of $\Sigma_j$ w$_j$ $= 1$ for the weights,

(v) $\quad$ **t** $= \Sigma_j$ w$_j$ **pv**$_j$ $-$ **R** $\Sigma_j$ w$_j$ **qv**$_{c(j)}$

is a solution.

$\quad$ In another embodiment, said weights w$_j$ of said weight vector **w** are determined on the basis of sum and difference functions of an alignment error e$_j$ given by a distance $\parallel$ **R** $\cdot$ **qv**$_{c(j)}$ $+$ **t** $-$ **pv**$_j$ $\parallel^2$ between said valid first points **pv**$_j$ and the corresponding valid second points qv$_{c(j)}$, the valid second points **R qv**$_{c(j)}$ $+$ **t** being transformed with said rigid transform **R, t.** In particular, depending on further conditions to be possibly imposed on the weights w$_j$ (such as a possible sparseness w$_j=$ 0 for certain weights, e.g. above a threshold k), w$_j$ may be given by the difference of the alignment errors e$_{k+1}$ - e$_j$ (and proper normalization to $\Sigma^k_{j=1}$ w$_j$ $= 1$).

$\quad$ In an embodiment, a parking lot, and in particular an indoor parking lot, is taken as said bordered traffic area. While the proposed method generally has advantages for any type of bordered traffic area where absolute positioning data might be distorted, might fail or not be available, this can in particular be the case for parking lots, e.g. between buildings where the resolution of the positioning of a motor vehicle might be slightly distorted (leading to slightly distorted and thus more difficult-to-align SDMs) and specifically indoor parking lots, where a GPS signal is normally not even available.

$\quad$ The invention furthermore proposes a system configured to pairwise align a plurality of SMDs, said system containing means for retrieving at least a pair of SDMs, and computational means configured to align at least a first SDM with a second SDM by performing the method described above. The system according to the invention shares the advantages of the method according to the invention. The advantages stated for the method and for its further developments can be transferred analogously to the system. The system may in particular be given by or implemented in a central computation facility of a manufacturer of the two motorized vehicles, such that the system retrieves the respective SDMs that are generated by all of the manufacturer's cars that are in use, via suitable communication means, and processes them by means of corresponding CPU, RAM and further computational hardware provided by the central computation facility.

$\quad$ In the following, an embodiment of the invention is explained in more detail with the aid of drawings. The drawings show schematically in each case:

Fig. 1 $\quad$ a top view of two motorized vehicles acquiring respective SDMs of an indoor parking lot, and
Fig. 2 $\quad$ a flow chart of a method for aligning the two SDMs acquired by the motorized vehicles of Fig. 1.

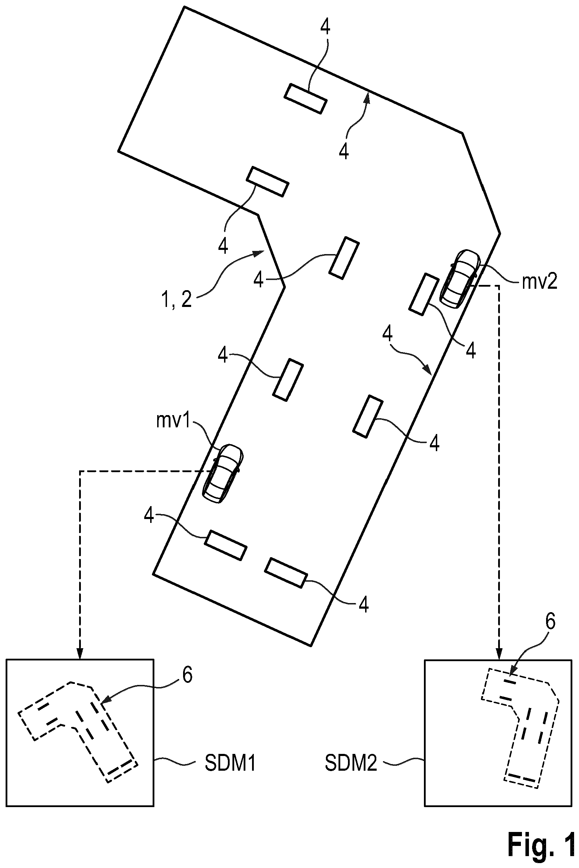

$\quad$ Corresponding parts and sizes are each provided with the same reference signs in all figures.
$\quad$ In Figure 1, a schematical top view of a bordered traffic area 1 is shown. In the present case, said bordered traffic area 1 is given by an indoor parking lot 2. The indoor parking lot 2 contains certain fixed objects 4, such as poles, walls, but also parking slots as defined by their delimitations.
$\quad$ A first and a second motorized vehicle mv1, mv2 are both driving through the indoor parking lot 2, possibly at different times. While driving through the indoor parking lot, the first motorized vehicle mv1, by means of its radar sensors (and possibly, its Lidar sensors), is performing a data collection on the fixed objects 4, such that the radar sensors of the first motorized vehicle mv1 (which may be a part of a DAS) generate radar data on the positions of the fixed objects 4. The data on the fixed objects 4 may be evaluated in order to identify the fixed objects 4 in the data. As these are located in the indoor parking lot 2, there is no GPS or similar absolute position data available to link a fixed objects 4 to a specific location. Thus, only odometry data might be available to allow for relative positioning information of the collected radar data.
$\quad$ From said radar data on the spatial distribution of delimitations of the indoor parking lot 2 (in particular, its enclosing walls) and of its (other) fixed objects 4 collected by the two motorized vehicles mv1, mv2, a first SDM (SDM1) and a second SDM (SMD2) are derived, respectively. This can be done by a processing of the collected radar data in the respective motorized vehicle mv1, mv2, generating the corresponding first/second SDM locally, i.e., by means of the onboard data processing hardware of the respective motorized vehicle mv1, mv2.

The first SDM (SDM1) may contain a map of "raw observations" (e.g., radar points etc.) of the indoor parking lot 2 that the first motorized vehicle mv1 has been driving through, or may be pre-processed in a sense that a recognition of data objects 6 corresponding to the fixed objects 4 of the indoor parking lot 2 may have been performed. The data objects 6 may thus be given by an agglomeration of data points, or may be vectorized data, both of which containing information on the presence of a data object 6 at a specific location of the SDM (corresponding to information of the presence of a fixed object 4 at a specific location the indoor parking lot 2). Please note that the data objects 6 of the first SDM (SDM1) do not necessarily cover all fixed objects 4 of the indoor parking lot 2 (as the first motorized vehicle mv1 possibly did not drive through the entire indoor parking lot 2), and might not correspond exactly to the data objects 6 of the second SDM (SDM2) due to detection noise etc.

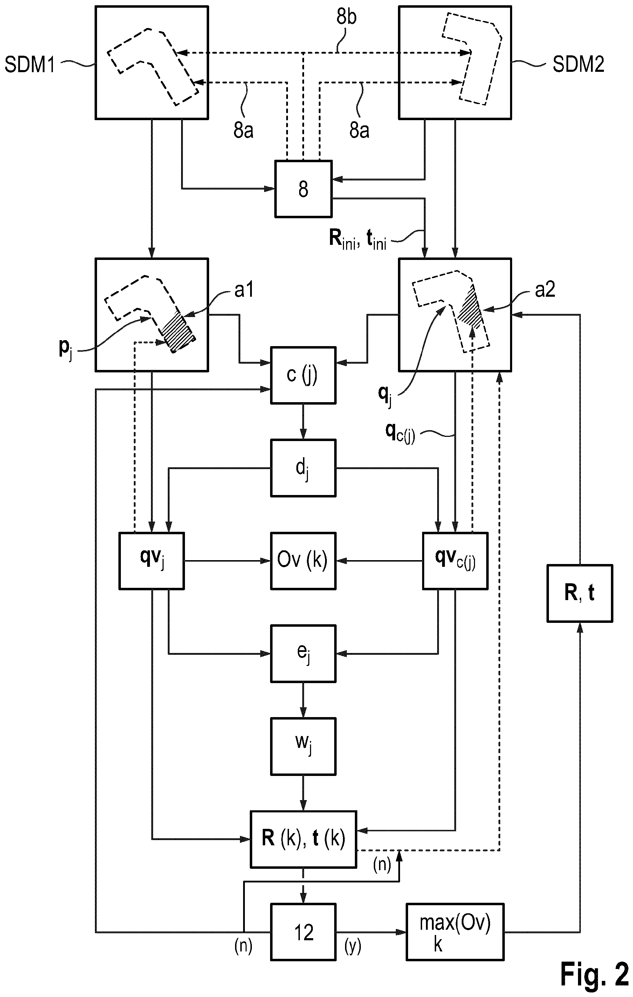

Figure 2 shows flowchart representing different steps of a method for aligning several different maps of the bordered traffic area 1 of Figure 1, and in particular, for aligning the two SDMs (SDM1 and SDM2).

As a starting point and for some sort of "pre-alignment", a non-trivial initial transform $\mathbf{R}_{ini}$, $\mathbf{t}_{ini}$ (i.e., with $\mathbf{R}_{ini} \neq \mathbf{Id}$ and $\mathbf{t}_{ini} \neq$ null vector) is determined from a an image analysis 8 of the first and second SDM (SDM1, SDM1), said image analysis 8 determining respective key points 8a (e.g., corners) of the data objects 6 in each SMD, and a feature descriptor 8b for each of the key points 8a, said feature descriptor 8b being indicative of the surroundings of the key point, i.e., of the geometry of the data object at the key point as well as the geometry (and distance) of possible further data objects close to the respective key point 8a.

After applying said initial transform $\mathbf{R}_{ini}$, $\mathbf{t}_{ini}$, an to the second SDM (SDM2) for said pre-alignment, the first and the second SDM (SDM1, SDM2) are converted into corresponding point clouds containing respective first and second points $\mathbf{p}_j$, $\mathbf{q}_j$, and an iteration for finding an optimal rigid transform $\mathbf{R}, \mathbf{t}$ is performed.

A first step of the iteration may be given by establishing a correspondence relation c (j) between said first and second points $\mathbf{p}_j$, $\mathbf{q}_j$, possibly according to equation (i), i.e., by minimizing for each first point $\mathbf{p}_j$ the distance (or the squared distance) to a second point $\mathbf{q}_j$ after application of the rigid transform $\mathbf{R}$ (k - 1), $\mathbf{t}$ (k - 1) of the previous iteration round k - 1 (or of the initial transform $\mathbf{R}_{ini}$, $\mathbf{t}_{ini}$ in the first iteration round k = 1).

Then, the proper point distances $d_j = \| \mathbf{R} \, \mathbf{q}_{c(j)} + \mathbf{t}_{ini} - \mathbf{p}_j \|^2$ obtained in for determining the correspondence relation c (j) for properly corresponding point pairs $\mathbf{p}_j$, $\mathbf{q}_{jc(j)}$ are sorted in ascending order, e.g., by a mapping or reordering 10 of the index set j of the first points $\mathbf{p}_j$ in order to have the point distances $d_j$ as defined above in ascending order $d_j < d_{j+1}$.

On the basis of said sorted point distances $d_j$, valid first points $\mathbf{pv}_j$ and their corresponding valid second points $\mathbf{qv}_{c(j)}$ are selected. This may be done either by applying a hard threshold T on the sorted point distances $d_j$ (i.e., keep all pairs or corresponding points $\mathbf{p}_j$, $\mathbf{q}_{c(j)}$ with $d_j \leq T$ and discard all pairs with $d_j > T$). However, one may also look into the change rate $d_{j+1} - d_j$ of the sorted point distances as a criterion. For small change rates $d_{j+1} - d_j \leq T'$ (with a threshold $T \neq T'$), it is assumed that the underlying first and second points $\mathbf{p}_j$, $\mathbf{q}_{c(j)}$ of the two point clouds are still somewhat close to each other, and are covering a similar area. However, when the change rate exceeds the threshold, i.e., $d_{k+1} - d_k > T'$ from a specific index k upwards, then it is assumed that the correspondence c (j) for $j \geq k$ is done on the basis of points which may actually cover different parts of the indoor parking lot 2 (or an area of the indoor parking lot 2 which has been properly covered only by one of the motorized vehicles mv1, mv2, and not by both).

By means of this change rate $d_{k+1} - d_k$, the valid first points $pv_j$ and their corresponding valid second points $\mathbf{qv}_{c(j)}$ are selected. In this process, also a first valid area a1 of the first SDM (SDM1) and a second valid area a2 of the second SDM (SDM2) are defined as the respective areas which contain the first points $\mathbf{p}_j$ and the second points $\mathbf{q}_j$, respectively.

After establishing the correspondence relation c (j) in each iteration round k, an overlap measure Ov (k) between the valid first points $\mathbf{pv}_j$ and their corresponding valid second points $\mathbf{qv}_{c(j)}$ is calculated. The overlap measure Ov (k) may be calculated as given in equation (iii) or in a similar fashion, i.e., the first and second SDM (SDM1, SDM2), at least in the range of the first and second valid area a1, a2, may be converted into respective grids of regular first and second grid cells such that the overlap can be calculated from the product of the occupation (i.e., one for a valid point present in a grid cell and zero for the absence of a valid point) of first and second grid cells, said product being summed over all possible first grid cells in the first valid area a1 and over all possible second grid cells in the second valid area a2 (essentially, as given in equation (iii)). Note that the overlap measure may also be defined on all first points $\mathbf{p}_j$ and their corresponding second points $\mathbf{q}_{c(j)}$ in each iteration round, in a similar way to the definition given in equation (iii).

Then, a weight vector $\mathbf{w}$ of weights $w_j$ is determined from an alignment error $e_j$ given by the distance $\| \mathbf{R}$ (k - 1) $\mathbf{qv}_{c(j)} + \mathbf{t}$ (k - 1) - $\mathbf{pv}_j \|^2$ in each iteration round k, wherein the rigid transform $\mathbf{R}$ (k - 1), $\mathbf{t}$ (k - 1) is the rigid transform of the previous iteration round k - 1 (and may be given given by the initial transform $\mathbf{R}_{ini}$, $\mathbf{t}_{ini}$ for the first iteration round k = 1). A weight $w_i$, i.e., the i-th entry of the weight vector $\mathbf{w}$, may in particular be calculated from the difference $e_m - e_j$ for each entry i, wherein said alignment errors $e_j$ shall be sorted in ascending order, and the index value m shall denote the last non-zero weight $w_m \neq 0$, i.e., $w_j = 0$ for all $j > m$. The difference $e_m - e_j$ then shall further be normalized such that $\Sigma_j w_j = 1$ holds.

Then, from the weights $w_j$, in each iteration round k, the rigid transform $\mathbf{R}$ (k), $\mathbf{t}$ (k) shall be calculated, wherein the rotation matrix $\mathbf{R}$ (k) may be calculated by minimizing equation (iv), yielding the orthogonal matrices $\mathbf{U}, \mathbf{V}$ from the singular

value decomposition $\mathbf{U}\,\Sigma\,\mathbf{V^T} = \mathbf{Q\,W\,P^T}$ **of** the matrices of the respective valid first and second points $\mathbf{pv}_j$, $\mathbf{qv}_{c(j)}$. The translation $\mathbf{t}$ (k) may be calculated according to equation (v), using the **w**-weighted means of the valid first and second points $\mathbf{pv}_j$, $\mathbf{qv}_{c(j)}$.

Finally, a convergence criterion 12 is calculated in order to determine whether or not to enter the next iteration round k+1. The convergence criterion 12 may be determined on the basis of a distance measure between the rigid transforms of two subsequent iteration rounds or on the basis of said overlap measure Ov (in particular, of a change rate of said overlap measure Ov). Thus, the convergence criterion 12 may be determined, e.g., on the basis of a component-wise change rate, i.e., $|r_{ij}(k+1) - r_{ij}(k)|$ (or a relative change rate) with $r_{ij}(k)$ being the entry [i,j] of the rotation matrix $\mathbf{R}$ (k) in the k-th iteration (and a similar criterion for the translation $\mathbf{t}$). If said change rate drops below a threshold, then convergence is assumed.

If the convergence criterion 12 is not fulfilled (n), the iteration enters in its next round k → k+1, wherein the rigid transform $\mathbf{R}$ (k), $\mathbf{t}$ (k) of round k is applied to the second points $\mathbf{q}_j$ (dashed line) in order to determine an updated version of the correspondence relation c(j) in the next round k+1. If the convergence criterion 12 is fulfilled (y), the rigid transform $\mathbf{R}$ (k), $\mathbf{t}$ (k) maximizing the overlap measure Ov (k) is taken as the final result, and applied to the second SDM (SDM2).

Although the invention has been illustrated and described in more detail by the preferred embodiment example, the invention is not limited by the disclosed examples and other variations may be derived by the skilled person without departing from the scope of protection of the invention.

**Reference Numeral**

| | |
|---|---|
| 1 | bordered traffic area |
| 2 | indoor parking lot |
| 4 | fixed objects |
| 6 | data objects |
| 8 | image analysis |
| 8a | key points |
| 8b | feature descriptors |
| 10 | reordering (of index set j) |
| 12 | convergence criterion |

| | |
|---|---|
| a1/2 | first/second valid area |
| c (j) | correspondence |
| $d_j$ | point distance |
| $e_j$ | alignment error |
| mv1/2 | first/second motorized vehicle |
| Ov | overlap measure |
| $\mathbf{p}_j$ | first point |
| $\mathbf{pv}_j$ | valid first point |
| $\mathbf{q}_j$ | second point |
| $\mathbf{qv}_j$ | valid second point |
| $\mathbf{R, t}$ | rigid transform |
| $\mathbf{R_{ini}, t_{ini}}$ | initial transform |
| SDM1/2 | first/second single drive map |
| w; | weight |

**Claims**

1. Method for a pairwise alignment of a plurality of single drive maps (SDM1, SDM2), each single drive map (SDM1, SDM2) containing a plurality of data objects (6) associated with corresponding fixed objects (4) of a bordered traffic area (1), said data objects (4) being based on a data collection by a respective vehicle (mv1, mv2) when driving through said bordered traffic area (1),

   wherein a first single drive map (SDM1), based on its respective data objects (6), is converted into a first point cloud containing first points ($\mathbf{p}_j$), and a second single drive map (SDM2), based on its respective data objects (6), is converted into a second point cloud containing second points ($\mathbf{q}_j$),
   wherein for each first point ($\mathbf{p}_j$), a corresponding second point ($\mathbf{q}_{c(j)}$) is determined, establishing thereby a correspondence relation (c(j)), and a point distance ($d_j$) between each first points ($\mathbf{p}_j$) and their corresponding second points ($\mathbf{q}_{c(j)}$) is calculated, wherein the first points ($\mathbf{p}_j$) and/or corresponding second points ($\mathbf{q}_{c(j)}$) are sorted based on said point distances ($d_j$),

wherein a number of valid first points ($\mathbf{pv}_j$) of the first point cloud and corresponding valid second points ($\mathbf{qv}_{c(j)}$) of the second point cloud is selected on the basis of their respective sorted point distances ($d_j$),

wherein a weight vector comprising a number of weights ($w_j$) respectively assigned to the valid first and/or second points ($\mathbf{pv}_j$, $\mathbf{qv}_{c(j)}$) is determined on the basis of the valid first and second points' respective point distances ($d_j$), and

wherein a rigid transform ($\mathbf{R, t}$) for mapping the second single drive map (SDM2) is derived, said rigid transform ($\mathbf{R, t}$) being determined on the basis of said weight vector and said correspondence (c(j)) of the valid first points ($\mathbf{p}_j$) with the respective valid second points ($\mathbf{qv}_{c(j)}$) and/or said point distances ($d_j$).

2. The method according to claim 1,
   wherein the rigid transform ($\mathbf{R, t}$) is applied to the second single drive map (SDM2), and wherein the steps of

   - establishing a correspondence relation (c(j)) between said first and second points ($\mathbf{p}_j$, $\mathbf{q}_{c(j)}$),
   - calculating a point distance ($d_j$) between each first points ($\mathbf{p}_j$) and their corresponding second points ($\mathbf{q}_{c(j)}$),
   - sorting the first and/or second points ($\mathbf{p}_j$, $\mathbf{q}_{c(j)}$),
   - selecting a number of valid first points ($\mathbf{pv}_j$) and corresponding valid second points ($\mathbf{qv}_{c(j)}$),
   - determining a number of weights ($w_j$) respectively assigned to the valid first and/or second points ($\mathbf{pv}_j$, $\mathbf{qv}_{c(j)}$) and
   - deriving a rigid transform ($\mathbf{R, t}$) for mapping the second single drive map (SDM2), as well as applying said rigid transform ($\mathbf{R, t}$) to the second single drive map (SDM2), are iterated until a convergence criterion (12) is fulfilled.

3. The method according to claim 2,

   wherein in each iteration round, an overlap measure (Ov) of at least the valid first points ($\mathbf{pv}_j$) with a transformed set of valid second points ($\mathbf{qv}_{c(j)}$) is calculated, said transformed set of valid second points ($\mathbf{qv}_{c(j)}$) being derived by applying the rigid transform ($\mathbf{R, t}$) of the present iteration round to the valid second points ($\mathbf{qv}_{c(j)}$), and
   wherein a final rigid transform ($\mathbf{R, t}$) of the iteration is determined on the basis of the values of the overlap measures (Ov) of each iteration round.

4. The method according to claim 2 or 3,
   wherein said convergence criterion (12) is determined on the basis of a distance measure between the rigid transforms ($\mathbf{R, t}$) of two subsequent iteration rounds.

5. The method according to claim 3 or 4,
   wherein said convergence criterion (12) is determined on the basis of said overlap measure (Ov).

6. The method according to any of claims 3 to 5,

   wherein for said overlap measure (ov), the first single drive map (SDM1) is converted into a grid of a multiplicity of first cells at least in the range of the first valid points ($\mathbf{pv}_j$), and a transformed second single drive map, being defined as the second single drive map (SDM2) after applying the rigid transform ($\mathbf{R, t}$), is converted into a grid of a multiplicity of second cells at least in the range of said transformed set of valid second points ($\mathbf{qv}_{c(j)}$), and
   wherein the overlap measure (Ov) is derived on the basis of a cell-wise coincidence count of first valid points ($\mathbf{pv}_j$) with the corresponding valid second points ($\mathbf{qv}_{c(j)}$) from the transformed set.

7. The method according to any of the preceding claims,
   wherein prior to the process of determining said rigid transform ($\mathbf{R, t}$) or the rigid transform ($\mathbf{R, t}$) of the first iteration round, an initial transform ($\mathbf{R_{ini}, t_{ini}}$) is performed on the second single drive map (SDM2), said initial transform ($\mathbf{R_{ini}}$, $\mathbf{t_{ini}}$) being determined on the basis of a morphological analysis of said fixed objects (4) represented in the first and/or second single drive map (SDM1, SDM2).

8. The method according to claim 7,
   wherein said initial transform ($\mathbf{R_{ini}, t_{ini}}$) is determined on the basis of an image analysis (8) as said morphological analysis, said image analysis (8) being performed on respective first and second images derived from the first and second single drive map (SDM1, SDM2) and employing a determination of key points (8a) and corresponding feature descriptors (8b) for matching corresponding points of the first and second single drive map (SDM1, SDM2).

9. The method according to any of the preceding claims,
   wherein for selecting said number of valid first points ($\mathbf{pv}_j$) and corresponding valid second points ($\mathbf{qv}_j$), a rate of change in said sorted point distances ($d_j$) is taken into account.

10. The method according to any of the preceding claims,

    wherein a first valid area (a1) of the first single drive map (SDM1) and a second valid area (a2) of the second single drive map (SDM2) are estimated based on said first points ($\mathbf{p}_j$) and said second points ($\mathbf{q}_{c(j)}$), and
    wherein for selecting said number of valid first points ($\mathbf{pv}_j$) and corresponding valid second points ($\mathbf{qv}_{c(j)}$), a scaling of said point distances ($d_j$) based on a ratio of said first valid area (a1) and said second valid area (a2) is taken into account.

11. The method according to any of the preceding claims,
    wherein a rotation of said rigid transform ($\mathbf{R, t}$) is determined on the basis of a singular value decomposition method, using a first matrix of the first valid points ($\mathbf{pv}_j$), a second matrix of the second valid points ($\mathbf{qv}_j$) and a weight matrix containing said entries of said weight vector in said singular value decomposition method.

12. The method according to any of the preceding claims,
    wherein a translation of said rigid transform ($\mathbf{R, t}$) is determined on the basis of a weighted mean of the first valid points ($\mathbf{pv}_j$) and a weighted mean of the second valid points ($\mathbf{qv}_{c(j)}$), said weighted means being weighted by said weight vector.

13. The method according to any of the preceding claims,
    wherein said weights ($w_j$) of said weight vector are determined on the basis of sum and difference functions of an alignment error ($e_j$) given by a distance between said valid first points ($\mathbf{pv}_j$) and the corresponding valid second points ($\mathbf{qv}_{c(j)}$), the valid second points ($\mathbf{qv}_{c(j)}$) being transformed with said rigid transform ($\mathbf{R, t}$).

14. The method according to one of the preceding claims,
    a parking lot is taken as said bordered traffic area (1).

15. A system configured to perform a pairwise alignment of a plurality of single drive maps (SDM1, SDM2),
    said system containing means for retrieving at least a pair of single drive maps (SDM1, SDM2), and computational means configured to align at least a first single drive map (SDM1) with a second single drive map (SDM2) by performing the method according to any of the preceding claims.

**Fig. 1**

**Fig. 2**

**EUROPEAN SEARCH REPORT**

Application Number

EP 24 21 7383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/006213 A1 (HUAWEI TECH CO LTD [CN]; PIASCO NATHAN [DE]) 2 February 2023 (2023-02-02) * page 2, lines 7-8 * * page 17, lines 7-14; figure 1B * * page 16, line 26 * * page 18, line 26 - page 19, line 33 * ----- | 1-15 | INV. G01C21/00 G06T7/30 |

TECHNICAL FIELDS
SEARCHED      (IPC)

G01C
G01S
G06T

The present search report has been drawn up for all claims

| Place of search | Date of completion of the search | Examiner |
|---|---|---|
| The Hague | 31 March 2025 | de la Rosa Rivera, E |

EPO FORM 1503 03.82 (P04C01)

## ANNEX TO THE EUROPEAN SEARCH REPORT
## ON EUROPEAN PATENT APPLICATION NO.

EP 24 21 7383

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2025

| Patent document cited in search report | Publication date | Patent family member(s) | | Publication date |
|---|---|---|---|---|
| WO 2023006213 A1 | 02-02-2023 | CN | 117730239 A | 19-03-2024 |
| | | EP | 4281729 A1 | 29-11-2023 |
| | | WO | 2023006213 A1 | 02-02-2023 |